# EUROPEAN PATENT SPECIFICATION

(11) **EP 2 476 588 B1**
(45) Date of publication and mention of the grant of the patent: **30.07.2014**
(21) Application number: 10815296.8
(22) Date of filing: 01.09.2010
(51) Int. Cl.: B60R 1/00, B60R 11/02, H04N 7/18

(54) **VEHICLE SURROUNDING MONITOR APPARATUS**
MONITORVORRICHTUNG FÜR FAHRZEUGUMGEBUNGEN
DISPOSITIF DE CONTRÔLE DES ENVIRONS D'UN VÉHICULE

(30) Priority: 11.09.2009 JP 2009210053
(43) Date of publication of application: 18.07.2012
(73) Proprietor: Aisin Seiki Kabushiki Kaisha, Aichi 448-8650 (JP)
(72) Inventor: WATANABE Kazuya, Kariya-shi Aichi 448-8650 (JP)
(74) Representative: TBK
(86) International application number: PCT/JP2010/064866
(87) International publication number: WO 2011/030699

(56) References cited:
- DE-A1-102008 038 463
- JP-A- 8 301 010
- JP-A- 8 301 010
- JP-A- 2002 109 697
- JP-A- 2003 134 507
- JP-A- 2003 199 093
- JP-A- 2003 212 041
- JP-A- 2009 060 404

## Description

### Technical Field

The present invention relates to a vehicle surrounding monitor apparatus configured to effect a predetermined processing on a captured image of the surrounding of a vehicle captured by a camera and to display the resultant image on a display device provided in the vehicle interior.

### Background Art

When a captured image of vehicle surrounding captured by a camera is to be displayed on a display device provided in the vehicle interior, as a technique of effecting a predetermined image processing (a distortion correction) on the captured image for better visibility for the driver, there is known a method described in the Japanese Unexamined Patent Application Publication No. 2009-12652 for example.

With implementation of a distortion correction, the visibility of the driver for the displayed image is improved. Namely, by displaying an image (screen image) of vehicle surrounding captured by a camera having a wide angle of view (e.g. horizontally 160 degrees or more) as a single image, a wide area can be visually checked on the display screen, so that presence/absence of an obstacle, a pedestrian or the like can be recognized.

Further background art is for example known from the document DE 10 2008 038 463 A1 relating to an image processing apparatus which permits a user to readily recognize a current state of an angle of view. When an angle of view is switched from a wide-angle to a narrow-angle, range display is performed for a predetermined time prior to the switching. Range display includes a narrow-angle image frame formed with lines indicating a border of an image displayed for a predetermined time prior to the switching. After the predetermined time, a narrow-angle image is displayed and the range display is no longer displayed. The range display allows a user to readily recognize that the wide-angle image has been switched to the narrow-angle image by recognizing to what area in a pre-switching wide angle of view image the post-switching narrow-angle image corresponds.

This document is considered to represent the closest prior art and discloses:
a vehicle surrounding monitor apparatus comprising:
   at least one capturing means for capturing an image of the surrounding of a vehicle;
   a screen generating means for generating, based on a captured image captured by said capturing means, a display screen including a first state display image to be displayed and a display screen including a further state display image to be displayed, wherein an area of the vehicle surrounding displayed by the further state display image is narrower than an area of the vehicle surrounding displayed by the first state display image; and
   a displaying means for displaying the display screens generated by said screen generating means, wherein the displaying means is configured to display the display screen including said first state display image and the display screen including said further state display image in the further state.

Also, further background art is for example known from the document JP 08 301010 A relating to a vehicle rearward monitoring device which can obtain a video signal having an angle of view suitable for a respective device (such as a monitor) to monitor the rearward by making common use of a single camera.

However, if a vehicle starts traveling with an image (screen image) having such wide angle of view being displayed on a two-dimensional display screen, the image moves in accordance with this vehicle movement, so that there occurs a problem that it becomes difficult to accurately grasp the sense of direction or sense of distance. Further, under a stopped state when the traveling (reversing) is yet about to be started, it is desired to recognize presence/absence of an obstacle or a pedestrian by visually checking a wide area on the display screen. Whereas, once the traveling (reversing) has started, as the traveling (reversing) proceeds with the driver of the vehicle monitoring of the surrounding, it is not absolutely needed to display a wide area.

### Summary of Invention

The present invention has been made to address to the above-described problem and its object is to provide the driver with accurate and appropriate presentation of a situation of an obstacle or a human present in the surrounding of the vehicle, in accordance with a use situation (traveling situation) of the vehicle.

According to a technical solution provided by the present invention for achieving the above-described technical object, a vehicle surround monitor apparatus comprises:
at least one capturing means for capturing the surrounding of a vehicle;
a screen generating means for generating, based on a captured image captured by said capturing means, a display screen including a stopped state display image to be displayed when the vehicle is in a stopped state and a display screen including a non-stopped state display image to be displayed when the vehicle is in a non-stopped state (i.e. not in the stopped state), wherein an area of the vehicle surrounding displayed by the non-stopped state display image is narrower than an area of the vehicle surrounding displayed by the stopped state display image; and
a displaying means for displaying the display screens generated by said screen generating means, wherein the displaying means is configured to display the display screen including said stopped state display image in the stopped state and the display screen including said non-stopped state display image in the non-stopped state.

In the technical solution provided by the present invention, preferably, said capturing means is a single capturing means and said non-stopped state display image is a partial image of said stopped state display image.

In the technical solution provided by the present invention, preferably, said stopped state comprises a state from occurrence of a change of a shift position of the vehicle to a reversing position to determination of start of the vehicle and said non-stopped state comprises a state of occurrence of determination of start of the vehicle from the stopped state.

Further, in technical solution provided by the present invention, preferably, after the display screen including said non-stopped state display image is once displayed, the display screen including said stopped state display image is not displayed unless the shift position of the vehicle is changed to the reversing position.

Further, preferably, said determination of start of the vehicle comprises either determination of the vehicle having traveled by a predetermined distance after the shift position of the vehicle is changed to the reversing position or determination of speed of the vehicle being over a predetermined value.

With the technical solutions provided by the present invention, it is possible to provide the driver with accurate and appropriate presentation of a situation of an obstacle or a human present in the surrounding of the vehicle, in accordance with a use situation (driving situation) of the vehicle.

### Brief Description of Drawings

[Fig. 1] is a schematic view of a vehicle having a vehicle surrounding monitor apparatus according to an embodiment of the present invention;
[Fig. 2] is a view showing the vehicle surrounding monitor apparatus according to the embodiment of the present invention;
[Fig. 3] is a view for explaining a display screen to be displayed by the vehicle surrounding monitor apparatus relating to the embodiment of the present invention;
[Fig. 4] shows an actual image in the display screen displayed by the vehicle surrounding monitor apparatus relating to the embodiment of the present invention;
[Fig. 5] is a view for explaining the display screen displayed by the vehicle surrounding monitor apparatus relating to the embodiment of the present invention;
[Fig. 6] is a view for explaining operations of a screen generation unit relating to the embodiment of the present invention;
[Fig. 7] is a view for explaining an operation at a time of screen switchover relating to the embodiment of the present invention;
[Fig. 8] is a schematic view showing a modified example of the display screen displayed by the vehicle surrounding monitor apparatus relating to the embodiment of the present invention;
[Fig. 9] is a schematic view showing a modified example of the display screen displayed by the vehicle surrounding monitor apparatus relating to the embodiment of the present invention;
[Fig. 10] is a schematic view showing a modified example of the display screen displayed by the vehicle surrounding monitor apparatus relating to the embodiment of the present invention; and
[Fig. 11] is a schematic view showing a modified example of the display screen displayed by the vehicle surrounding monitor apparatus relating to the embodiment of the present invention.

### Description of Embodiments

Next, an embodiment of the present invention will be described with reference to the accompanying drawings.

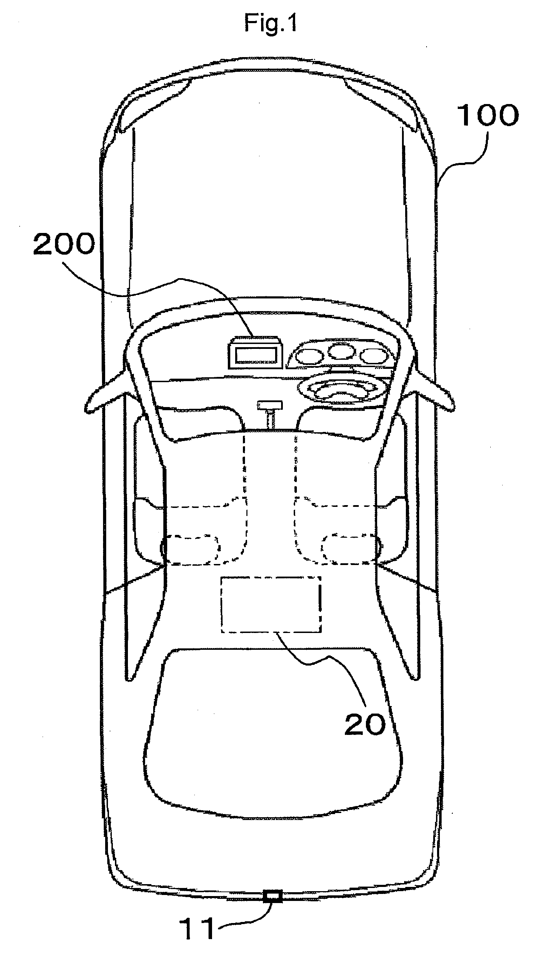

Fig. 1 is a schematic view of a vehicle 100 having a vehicle surrounding monitor apparatus 50 relating to the present invention. The vehicle 100 includes a rearview camera 11 for capturing a view rearwardly of the vehicle 100.

The rearview camera 11, as shown in Fig. 1, is mounted to a rear portion of the vehicle 100 and set to be oriented slightly downward relative to the horizontal. More particularly, the optical axis of the rearview camera 11 forms an acute angle relative to the road surface on which the vehicle 100 is present. For instance, the rearview camera 11 is set with a depression angle of 30 degrees approximately, and oriented toward the rear side of the vehicle 100, so that the camera 11 can image an area extending for about 8 meters rearwardly of the vehicle 100.

Also, the rearview camera 11 is a digital camera incorporating an capturing device such as a CCD (charge coupled device) or a CIS (CMOS image sensor) configured to output information captured by this capturing device in realtime as video information. Preferably, this rearview camera 11 is comprised with using a wide-angle lens (having e.g. an angle of filed ranging 160 degrees or more) or a fish-eye lens.

Further, the vehicle 100 includes an electronic control unit 20 shown in Fig. 1. The electronic control unit 20 is comprised of e.g. a microcomputer having a ROM, a RAM, etc.

As will be described later, a captured image (screen image) captured by the rearview camera 11 is transmitted to the electronic control unit 20 to be subjected to a predetermined processing in this electronic control unit 20 and then displayed on a monitor 200 (displaying means) provided in the vehicle interior shown in Fig. 1. In case a navigation system is mounted in the vehicle 100, preferably, the monitor is used also as a display device of the navigation system.

The vehicle 100 mounts an unillustrated vehicle speed sensor for detecting the speed of the vehicle 100. Wheel-generated pulses or the vehicle speed detected by the vehicle speed sensor is transmitted to the electronic control unit 20 through a predetermined communication means.

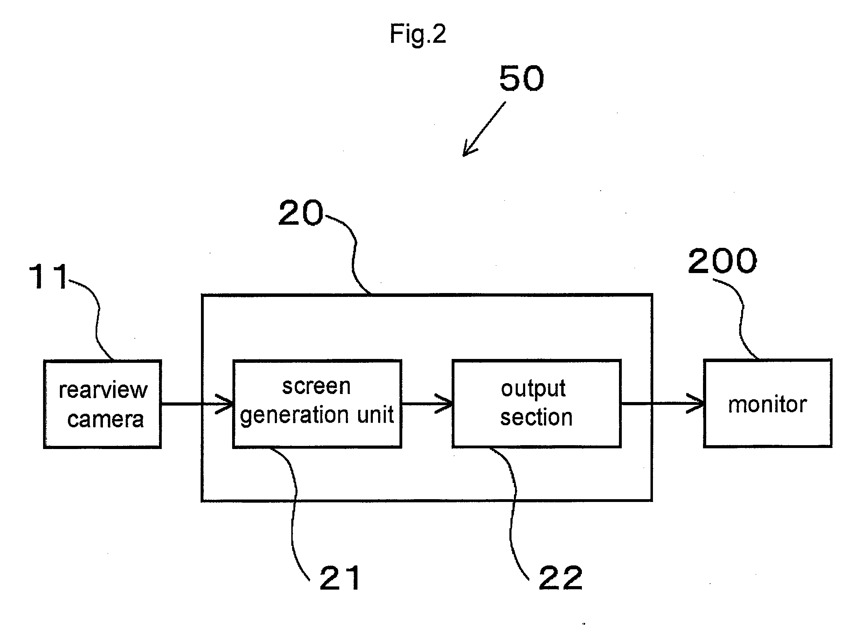

Fig 2 shows a vehicle surrounding monitor apparatus 50. A captured image captured by the rearview camera 11 is transmitted to the electronic control unit 20. The electronic control unit 20 includes a screen generation unit 21 and an output unit 22. As will be described later, the screen generation unit 21 generates a display screen based on the captured image captured by the rearview camera 11 and inputted to this unit 21. The generated display screen is transmitted from the screen generation unit 21 though the output unit 22 to the monitor 200 to be displayed on this monitor 200.

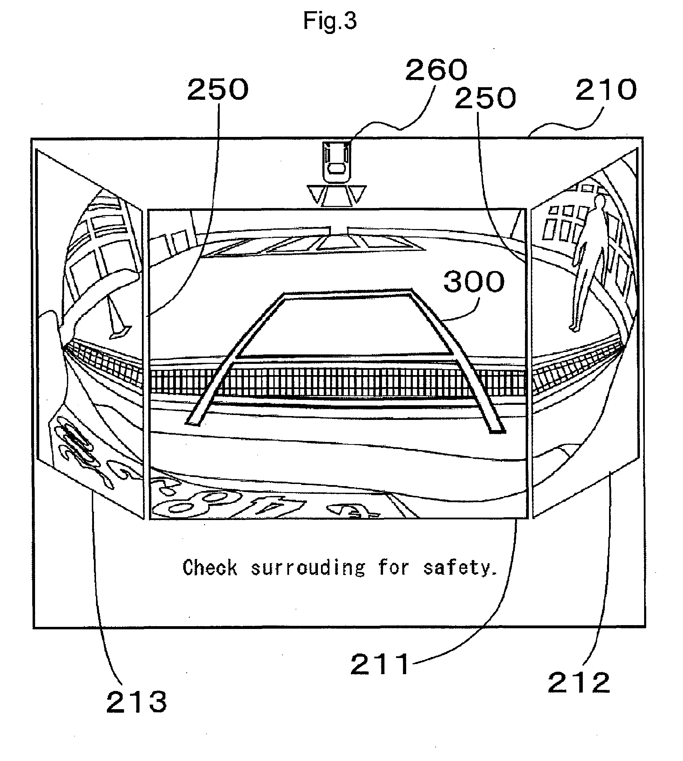

Fig. 3 is a view showing a display screen 210 displayed on the monitor 200 of the vehicle surrounding monitor apparatus 50 according to the present invention. For instance, if the driver sets the shift position to the R (reverse) position, the display screen is switched to this display screen shown in this Fig. 3. As will be described later, the captured image captured by the rearview camera 11 is displayed as a center image 211, a right-side image 212 disposed on the right side of the center image 211 and having an approximately parallelogram shape, and a left-side image 213 disposed on the left side of the center image 211 and having an approximately parallelogram shape.

Between the center image 211 and the right-side image 212 and between the center image 211 and the left-side image 213, dividing lines 250 are provided for partitioning therebetween respectively. In other words, between the center image 211 and the right-side image 212 and between the center image 211 and the left-side image 213, there are provided predetermined gaps. As the center image 211 and the right-side image 212 are displayed with separation therebetween and the center image 211 and the left-side image 213 are also displayed with separation therebetween, distinction between the rear side and the lateral sides is facilitated.

Further, as shown in Fig. 3, the image contents of the center image 211 and the right-side image 212 are continuous with each other across the dividing line 250 therebetween (the continuity between their image contents is maintained). Also, the center image 211 and the right-side image 212 have respective adjacent sides thereof parallel with each other. The same is true with the center image 211 and the left-side image 213. The generation of the center image 211, the right-side image 212 and the left-side image 213 and the above laying-out of these images in the display screen are provided by the functions of the screen generation unit 21.

Meanwhile, the "continuity of image contents" means presence of connection between the center image 211 and the right-side image 212 (or the left-side image 213). More particularly, the continuity of image contents refers to such exemplary cases as agreement (or continuity) of pixel values on the mutually opposed sides of the center image 211 and the right-side image 212 (or the left-side image 213) when these images are laid side by side, or continuity of pixel values corresponding to a length of the predetermined gap provided between the center image 211 and the right-side image 212 (or the left-side image 213), albeit no agreement (or no continuity) of the pixel values on the mutually opposed sides of the center image 211 and the right-side image 212 (or the left-side image 213). Putting the latter case in a different way, in a situation where the pixel values on the opposed sides of the center image 211 and the right-side image 212 (or the left-side image 213) are in agreement (or continuity) with each other, and in case the center image 211 and the right-side image 212 (or the left-side image 213) are laid side by side without any gap therebetween, the border between the center image 211 and the right-side image 212 (or the left-side image 213) is masked with a dividing line having a predetermined width. This case is an example of the "continuity of image contents".

The display screen 210 provided by the vehicle surrounding monitor apparatus 50 according to the instant embodiment is configured to cause the driver to grasp the situations of the rear side and the right and left sides of the vehicle, as if the driver were viewing them in a triple mirror having right and left mirrors held to the center mirror at a predetermined angle. More particularly, in the instant embodiment, the center image 211 is a screen image along the forwarding direction (front face) with the steering wheel being set to an approximately straight traveling direction, and the right-side image 212 and the left-side image 213 respectively display the surrounding conditions on the right and left sides of the displayed contents of the center image 211. That is, the positional relationships among the center image 211, the right-side image 211 and the left-side image 213 correspond to the actual positional relationships, and the front side image (center image 211) is displayed in a rectangular shape and the images corresponding to the right and left sides of the front side image (the right-side image 212, the left-side image 213) are displayed in a parallelogram shape, respectively. Therefore, the wide-range rear side of the vehicle 100 can be checked for safety and also it is easy to make distinction as to which of the rear side or the lateral side an obstacle or a human is present.

Further, at an upper portion of the display screen 210, there is displayed an icon 260 comprised of a schematic representation of the vehicle 100 and two triangles and a trapezoid. This is for causing the driver to recognize where in the surrounding of the vehicle 100 the center image 211, the right-side image 212 and the left-side image 213 are now displaying.

At a lower portion of the display screen 210, there is displayed a caution-arousing text message.

The center image 211 displays, in superposition, indicator lines 300 serving as indicators during driving by the driver. Of these indicator lines 300, the indicator lines extending laterally in the screen indicate respective expected positions from the rear end of the vehicle 100. For instance, the indicator lines extending laterally in the screen indicate positions distant by 50 cm, 1 m and 3 m, from the rear end of the vehicle 100, respectively.

Further, of the above indicator lines 300, the left and right two lines extending along substantially upper-lower direction of the display screen 210 indicate the width of the vehicle 100 or a width resultant from addition/subtraction of a predetermined value to/from the width of the vehicle 100.

The indicator lines 300 can be either fixed lines, or lines that vary in operative association with a steering angle.

Further, the indicator lines 300 can be displayed in a three-dimensional manner with addition thereto of at least one of shading and side portions. This arrangement allows the driver to recognize that the vehicle is now on the road surface displayed in the center image 211 showing the indicator lines 300.

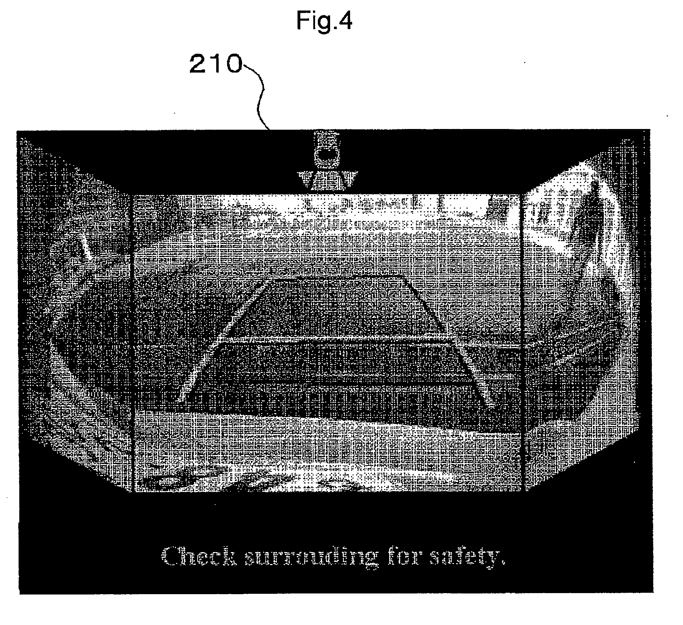

Fig. 4 shows an actual screen image in the display screen displayed by the vehicle surrounding monitor apparatus relating to the embodiment of the present invention.

Next, a processing by the screen generation unit 21 for generating the display screen will be explained.

In this screen generation unit 21, there is first effected a distortion correction processing described in the Japanese Unexamined Patent Application Publication No. 2009-12652, on a captured image obtained by the rearview camera 11. Referring to a case of applying the general arrangement of the distortion correction processing described in the Japanese Unexamined Patent Application Publication No. 2009-12652 to the instant embodiment, the unit effects a processing on the captured image in which while the first axis direction (lateral direction of the display screen) is maintained fixed, the image is enlarged by an enlargement factor along the second axis direction (vertical direction in the display screen) which enlarges the image non-linearly, in dependence on the distance from this second axis. The image is fixed along the first axis direction, whereas the image is enlarged by an enlargement factor γ along the second axis direction. The greater this enlargement factor, the farther from the second axis, i.e. the greater the coordinate value in the lateral direction of the display screen (the absolute value of the lateral coordinate of the display screen).

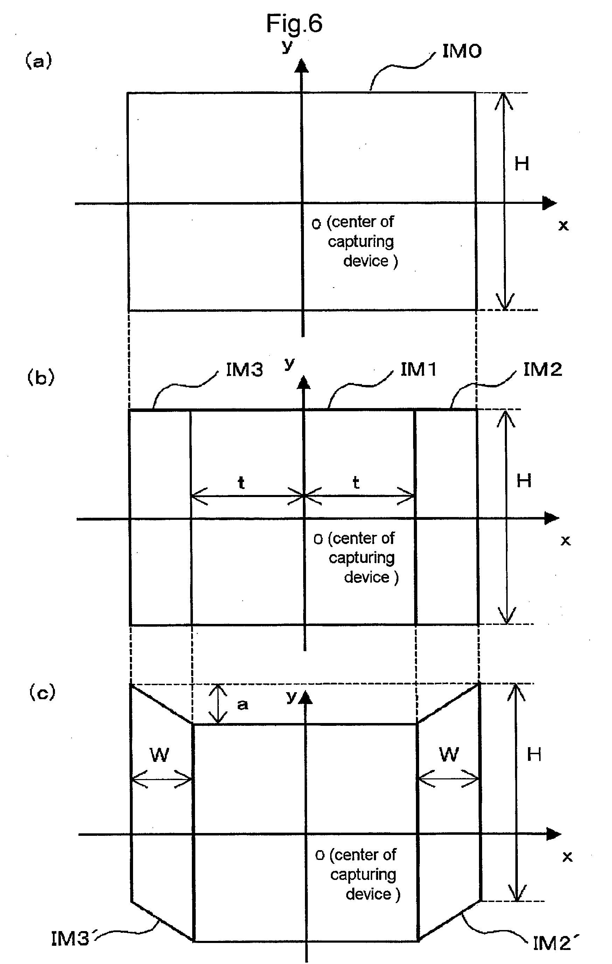

In Fig. 6 (a), IM0 represents an image obtained after the distortion correction processing is effected on a captured image captured by the rearview camera 11.

In the following discussion, it is assumed that the x coordinate has its positive side on the right side and the y coordinate has its positive side on the upper side and also that the origin 0 is the center of the captured image (capturing device).

Next, as described below, the center image 211, the right-side image 212 and the left-side image 213 are generated.

First, in IM0, in Fig. 6 (b), an area IM1 which is a rectangular area having the x coordinate: - t ≤ x ≤ t (t>0) and the y coordinate: -H/2 ≤ y ≤ H/2 (H>0) is set as the center image 211. In other words, as shown in Fig. 6 (b), the center image 211 is a partial image (IM1) having a rectangular shape with a vertical side length: H and a lateral side length: 2t.

The right-side image 212 is generated as follows. First, as shown in Fig. 6 (b), the process specifies IM2 as an area in the IM0 wherein the x coordinate is: t ≤ x ≤ t+W. Namely, IM2 is a partial image of IM0 and is adjacent IM1 within IM0. Therefore, IM2 is a rectangle having a vertical side length: H and a lateral side length: W, as shown in Fig. 6 (b). Here, through image transformation of IM2, IM2' is generated. This "image transformation" refers to setting of the pixel value: p for the coordinate values (X0, Y0) within IM2 to a pixel value for the coordinate values (X1, Y1) within IM2'.

Specifically, the process effects a coordinate transformation: X1=X0, Y1=a^{x} (X0 - t)/ W+ Y0. That is, the rectangular-shaped IM2 is image-transformed (linear transformed) into IM2' having parallelogram shape with a bottom side: H and a height: W shown in Fig. 6 (c). (W) represents a shearing area width, (a) represents a shearing amount, which is a predetermined value. Further, putting this image transformation in other words, this is translation of the coordinates (X0, Y0) to the coordinates (X0, Y1) (i.e. lifting up along the y axis direction). This IM2' is provided as the right-side image 212.

With the above-described image transformation, the right-side image 212 is formed as an image which extends further upwards along the y axis direction by the shearing processing as it extends to the right side (direction of greater (x) coordinate) relative to the original image IM2 (IM0). With this, it is possible to further alleviate "collapsing" of a three-dimensional object present adjacent the right extreme end of the screen within IM2.

Similarly to the above, the left-side image 213 is generated as follows. First, as shown in Fig. 6 (b), the process specifies IM3 as an area in the IM0 wherein the x coordinate is: t - W ≤ x ≤ -t. Namely, IM3 is a partial image of IM0 and is adjacent IM1 within IM0. Therefore, IM3 is a rectangle having a vertical side length: H and a lateral side length: W, as shown in Fig. 6 (b). Here, through image transformation of IM3, IM3' is generated. This "image transformation" refers to setting of the pixel value: p for the coordinate values (X0, Y0) within IM3 to a pixel value for the coordinate values (X1, Y1) within IM3'.

Specifically, the process effects a coordinate transformation: X1=X0, Y1=a^{x} (- X0 - t)/ W+ Y0. That is, the rectangular-shaped IM3 is image-transformed (linear transformed) into IM3' having parallelogram shape with a bottom side: H and a height: W shown in Fig. 6 (c). This IM3' is provided as the left-side image 213.

With the above-described image transformation, the left-side image 213 is formed as an image which extends further upwards along the y axis direction by the shearing processing as it extends to the left side (direction of smaller (x) coordinate) relative to the original image IM3 (IM0). With this, it is possible to further alleviate collapsing of a three-dimensional object present adjacent the left extreme end of the screen within IM3.

The screen generation unit 21 lays the right-side image 212 and the left-side image 213 generated as described above on the right and left sides of the center image 211 respectively, thus generating the display screen 210 shown in Fig. 3 and Fig. 4.

Next, the mode of operation of the vehicle surrounding monitor apparatus 50 according to the instant embodiment of the present invention will be explained.

When a driver stops the vehicle 100 and changes the shift position from another shift position to the reversing position (R position or reversing position) to reverse it for e.g. parking, the display screen is switched over to the display screen 210 shown in Fig. 3 and Fig. 4. More particularly, the display screen 210 shown in Fig. 3 and Fig. 4 is rendered into a display screen including an image ("stopped state display image") to be displayed when the vehicle 100 is under a stopped state. With this, in a situation when a reversing maneuver is about to be effected, the driver can check whether any obstacle, other traveling vehicle, a human, or the like is present in the rear surrounding of the vehicle, including, the rear lateral sides of the vehicle 100, so that the safety check for a wide area can be done appropriately. Incidentally, under this condition, if the shift position is changed from the reverse position (R position or reversing position) to another shift position, the vehicle surrounding monitor apparatus shifts into a standby mode for standing by, without effecting displaying for surrounding monitoring. In this standby mode, a navigation screen will be displayed for instance. Meanwhile, in the instant embodiment, the center image 211, the right-side image 212 and the left-side image 213 become the stopped state display image.

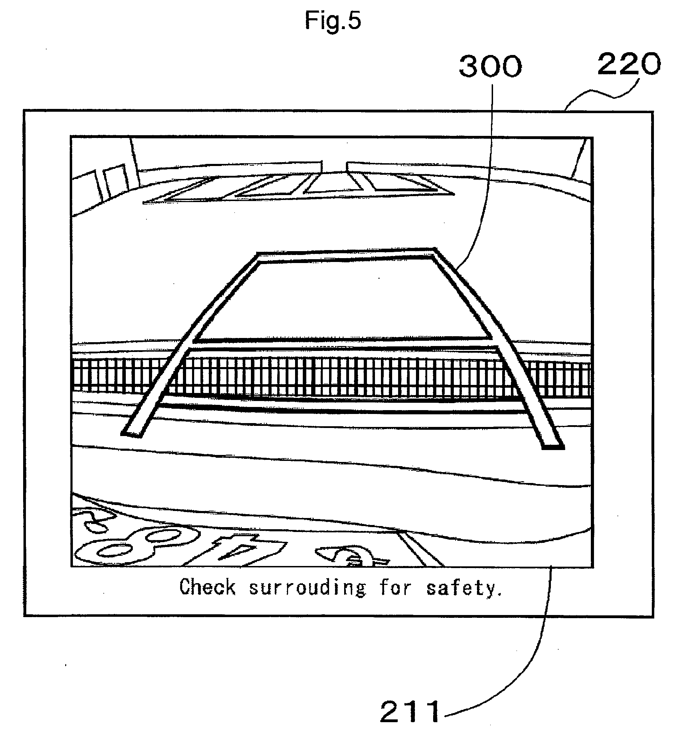

After checking the safety, when the vehicle 100 starts reversing (traveling, movement), the vehicle surrounding monitor apparatus switches over to the display screen 220 shown in Fig. 5 (traveling state screen) as a display screen including an image when the vehicle 100 is not under a stopped state ("non-stopped state display image"). Therefore, in the instant embodiment, the center image 211 becomes the non-stopped state display image.

Therefore, the screen generation unit 21 generates both a display screen including the stopped state display image and a further display screen including the non-stopped state display image. Incidentally, as described above, as the center image 211, the right-side image 212 and the left-side image 213 are the stopped state images and the center image 211 is the non-stopped state image, the surrounding area of the vehicle 100 displayed by the non-stopped state display image is narrower than the surrounding area of the vehicle 100 displayed by the stopped state display image. More particularly, the stopped state display image is a wide-angled display image, whereas the non-stopped state display image is a narrow-angled display image. Further, the non-stopped state display image is a partial image of the stopped state display image.

In the instant embodiment, the display screen including the non-stopped display image is the display screen 220 shown in Fig. 5. In this display screen 220, the center image 211 is displayed with an enlargement by the amount corresponding to absence of displaying of the right-side image 212 and the left-side image 213. However, it is also possible to employ, as the non-stopped state display image, simply an image with the right-side image 212 and the left-side image 213 eliminated from the display screen of Fig. 3 and Fig. 4, without any enlargement of the center image 211 (i.e. the center image 211 only).

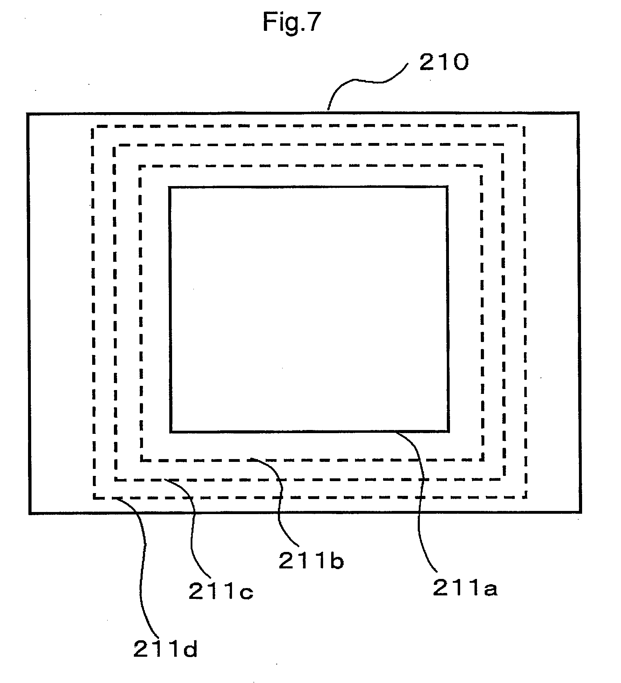

In the switchover from the display screen (display screen 210) including the stopped state display image to the display screen (display screen 220) including the non-stopped state display image, this may be effected as an immediate or direct switchover to the enlarged displaying of the center image 211. In the instant embodiment, however, the above switchover is effected in a manner as follows. Firstly, from the display screen 210, the right-side image 212 and the left-side image 213 are erased. then, as schematically shown in Fig. 7, the resultant center image 211 a (the center image 211 immediately after the erase of the right-side image 212 and the left-side image 213 therefrom) is enlarged to a center image 211 b, a further center image 211 c and then to a still further center image 211 d. This enlargement can be done in a continuous manner or step-by-step manner. With such presentation of the process of display screen switchover to the driver, the driver can readily recognize/understand to which portion of the display screen (image) before the switchover the display screen (image) after the switchover corresponds.

Here, the start of reversing of the vehicle 100 represents the timing when the electronic control unit 20 determines the speed of the vehicle 100 detected by the vehicle speed sensor exceeding a predetermined speed or the vehicle having traveled by a predetermined distance from its stopped state with using an integrated numerical value of the wheel pulses from the vehicle speed sensor as the moved distance detecting means for detecting a moved distance. Alternatively, it is possible to provide both the processing for determining the speed of the vehicle 100 detected by the vehicle speed sensor having exceeded a predetermined speed and the processing for determining the vehicle having traveled by a predetermined distance from its stopped state with using an integrated numerical value of the wheel pulses from the vehicle speed sensor, such that the "start of reversing of the vehicle 100" is determined upon establishment of either one of the above conditions. Or, for more reliable determination, the "start of reversing of the vehicle 100" may be determined upon establishment of both of the above conditions.

Incidentally, if the shift position is changed from the reversing position (R position or reverse position) to another shift position while the display screen (display screen 220) including the non-stopped state display image is being displayed, the vehicle surrounding monitor apparatus 50 will shift to the standby mode and e.g. the navigation screen will be displayed. Meanwhile, it is possible to configure such that the display screen is returned to the display screen (display screen 210) including the stopped state display image if the stopped state of the vehicle has lasted for a relatively long period (e.g. 5 seconds or 10 seconds), In this, the switchover to the display screen including the stopped state display image may be reported by means of a sound or a voice message to the driver.

With the above-described arrangement of automatically switching over to the image having an appropriate range, rather than an image having a wider viewing angle than necessary during a reversing (traveling), the driver can effect an appropriate surrounding monitoring suitable for the situation. Further, as no switch operation is required for the driver, the driver will not feel any troublesomeness.

Further, the vehicle 100 may sometimes not mount any illumination units for illuminating the areas of the right-side image 212 and the left-side image 213. Therefore, in the case of determination of nighttime (or in case the vehicle 100 is present at a location with low luminance such as an indoor location), advantageously, of the center image 211, the right-side image 212 and the left-side image 213, only the right-side image 212 and the left-side image 213 may be subject to a brightness correcting processing for displaying in greater brightness to improve the visibility. In such case, the determination of nighttime may be made based on brightness information of the entire captured image. Further alternatively, the brightness correction processing of the right-side image 212 may be made based on the brightness information of the right-side image 212 or the partial image (IM2) as the "source" image for this right-side image 212, whereas the brightness correction processing of the left-side image 213 may be made based on the brightness information of the left-side image 213 or the partial image (IM3) as the "source" image for this left-side image 213. In this case, nighttime may be determined if the brightness information is found below a predetermined threshold value, so that the right-side image 212 and the left-side image 213 may be displayed with enhanced brightness. Further alternatively, the nighttime determination may be made, based not on brightness information, but on clock-time information, or on activation of a headlight or side lamps for illumination by the driver. And, these determinations and processing are effected by the electronic control unit 20.

Incidentally, the present embodiment may be modified as follows.

In the foregoing embodiment, the electronic control unit 20 is provided separately of the rearview camera 11. The invention is not limited thereto. The electronic control unit 20 may be integrated within the rearview camera 11.

In the foregoing embodiment, there was explained the case at the time of reversing of the vehicle 100. Needless to say, the invention may be applied also to the time of forwarding of the vehicle 100. In such case, in the present embodiment, a frontview camera may be provided instead of the rearview camera 11 and the determination of the shift position may be made on the forward position (D position or the like), instead of the reversing position.

In the foregoing embodiment, a captured image from the single rearview camera 11 is divided to be displayed as the center image 211, the right-side image 212 and the left-side image 213. Instead, images captured by a plurality of cameras may be employed. For instance, in addition to the rearview camera 11, a right-side camera for capturing the rear right-side view of the vehicle 100 and a left-side camera for capturing the rear left-side view of the vehicle 100 may also be provided, and the captured image from the rearview camera 11 may be displayed in the center image 211, the image from the right-side camera may be displayed in the right-side image 212 and the image from the left-side camera may be displayed in the left-side image 213, respectively. That is, the arrangement is not limited to dividing an image of a single camera. In displaying images from a plurality of cameras, the positional and directional relationships between the respective images and the vehicle may be presented accurately to the driver. In such case, the capturing ranges of the rearview camera 11 and the right-side camera and the left-side camera may be overlapped with each other, or may not be overlapped with each other.

In the foregoing embodiment, there was explained the case wherein the rearward surrounding of the vehicle 100 is monitored by the rearview camera 11. Needless to say, the invention may be applied also to a case wherein the forward surrounding of the vehicle 100 is monitored by a frontview camera. The invention may be applied also to a case wherein the lateral side surrounding of the vehicle 100 is monitored by side view camera.

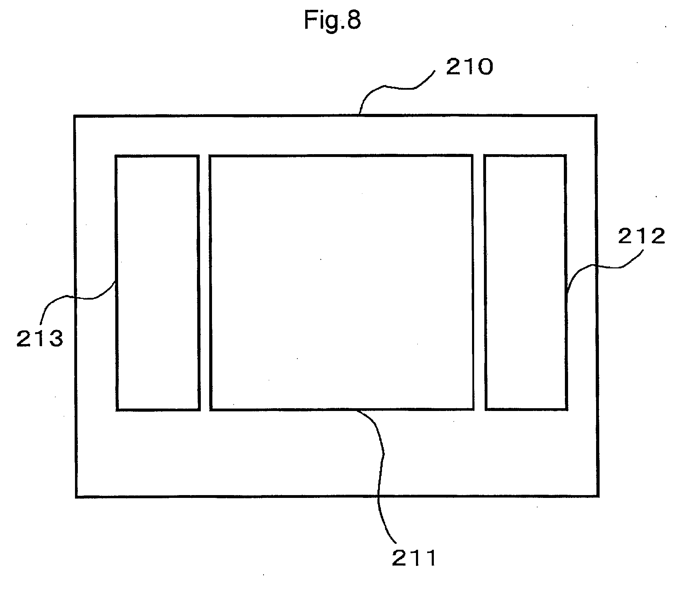

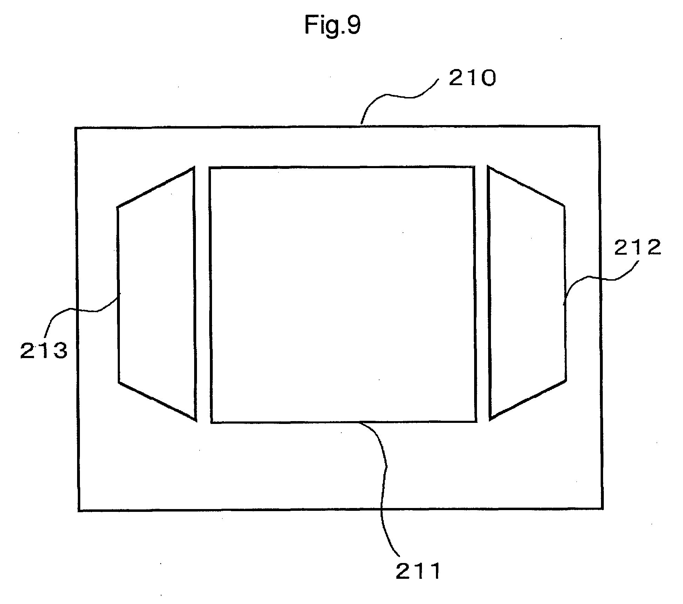

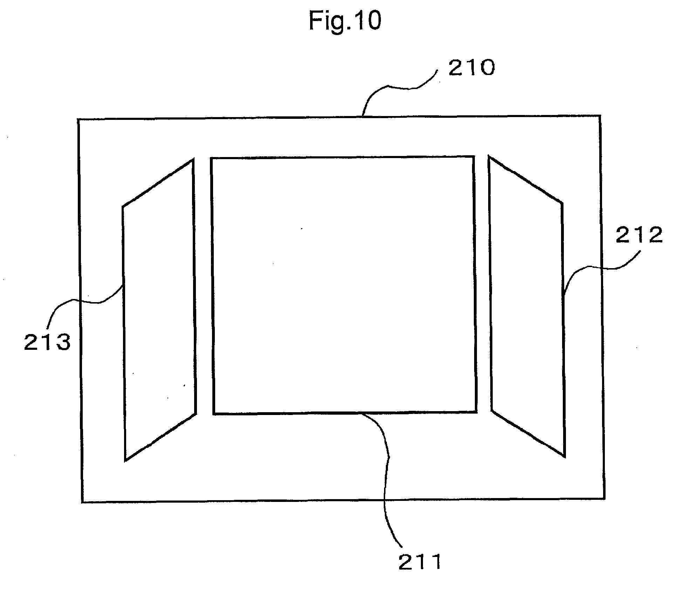

In the foregoing embodiment, there was explained the case wherein the right-side image 212 and the left-side image 213 each has a parallelogram shape, with the vertical side thereof not on the side of the center image 211 being positioned upwardly of the center image 211. Instead, Figs. 8-10 show modifications thereof. In Fig. 8, the right-side image 212 and the left-side image 213 each has a rectangular shape. In Fig. 9, the right-side image 212 and the left-side image 213 each has a trapezoidal shape. In Fig. 10, the right-side image 212 and the left-side image 213 each has a parallelogram shape with the vertical side thereof not on the side of the center image 211 being positioned downwardly of the center image 211. In addition to these, the right-side image 212 and the left-side image 213 each may have a triangular or polygonal shape. Also, the right-side image 212 and the left-side image 213 may be subjected to such an image modification as described above in accordance with the shape desired to be displayed in the display screen, or may not be subjected to any image modification, but formed simply as an image cut from a predetermined image in accordance with the shape desired to be displayed in the display screen.

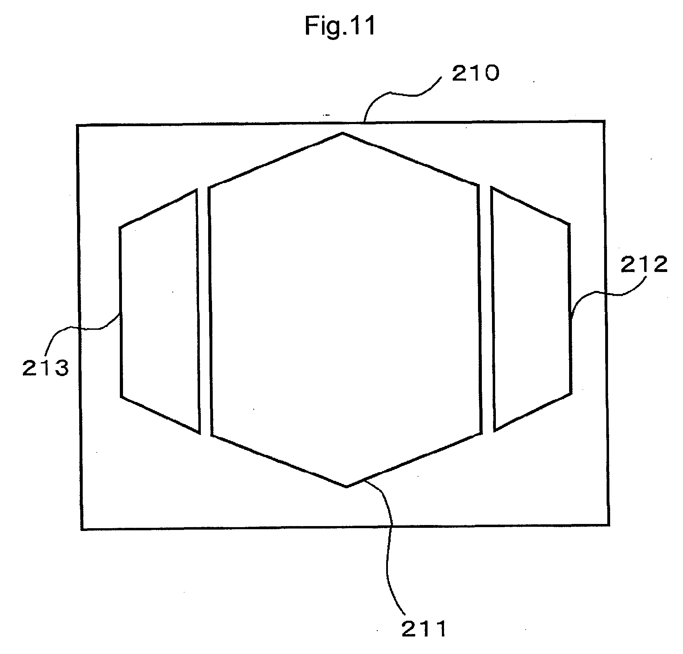

In the foregoing embodiment, the center image 211 has a rectangular shape. The invention is not limited thereto, but the center image 211 may have a hexagonal shape as shown in Fig. 11 or any other polygonal shape.

Meanwhile, in all of the modifications shown in Figs. 8-11, the adjacent sides of the center image 211 and the right-side image 212 (or the left-side image 213) are parallel with each other, with a predetermined gap formed therebetween, and the image contents thereof being continuous across the predetermined gap (a dividing line).

In the foregoing embodiment, during a stopped state of the vehicle 100, the center image 211, the left-side image 213 and the right-side image 212 are displayed, whereas during traveling thereof, only the center image 211 is displayed. Instead, during a stopped state of the vehicle 100, an image of a camera having a wide angle (e.g. 160 degrees) is displayed, whereas during traveling of the vehicle, an image having a narrow angle (e.g. about 130 degrees) which is a portion extracted from the wide angle image (partial image) may be displayed. Further, two camera, one having a wide angle, the other having a narrow angle, may be provided with displaying thereof being switched over simultaneously. Further, there may be provided images of the rearview camera 11, the left-side camera for capturing the rear right side of the vehicle 100 and the left-side camera for capturing the rear left side of the vehicle 100, so that during a stopped state, the image of the rearview camera 11 is displayed and also the image of at least one of the right-side camera and the left-side camera is displayed, whereas, during a traveling, only the image of the rearview camera 11 is displayed.

In the foregoing embodiment, when nighttime is determined, a brightness correction processing is effected on the right-side image 212 and the left-side image 213, to be displayed with enhanced brightness. Instead of this, an image processing such as a grayscale conversion, a reversal (a negative-positive reversal), or a grayscale conversion followed by a reversal (a negative-positive reversal), may be effected thereon. With a grayscale conversion, it becomes possible to obtain an image with as high as possible brightness even for a dark photographic subject. Also, with a reversal, a bright image can be obtained for a dark photographic subject. The sensitivity adjustment of a human eye takes place more quickly in light adaptation than in dark adaptation, so for the focus adjustment of the crystal lens too, a better response can be obtained for a light index, than for a dark index. Therefore, a negative-positive reversal of a low-brightness image is desirable in view of the human engineering, as well. Also, if a color image undergoes a negative-positive reversal, resultant colors thereof will significantly deviate from the real ones. For this reason, in case the captured image is a color image, it is desirable to effect a negative-positive reversal on a grayscale image for the purpose of alleviation of unnaturalness also.

In the foregoing embodiment, if a stopped state of the vehicle 100 is continued for some time (e.g. 5 second, 10 seconds, etc.) after the display screen is changed to the display screen including a narrow angle image (display screen 220), the display screen is returned to the display screen including the wide angle image (stopped state display image) (display screen 210). Instead of this, once the display condition has changed to the display screen including the narrow angle image (non-stopped state display image), even if the vehicle 100 is stopped thereafter, the display screen may not be returned to the display screen including wide angle image (stopped state display image) (display screen 210). In this case, once traveling (reversing) has been started, the screen switchover is not effected after each and every vehicle stopping according to the surrounding situation. Therefore, this arrangement will be suitable for a driver who does not like frequent switchover. Incidentally, this operation, put in other words, means that once the display screen including the non-stopped state display image is displayed, the display screen including the stopped state display image will not be displayed unless the shift position of the vehicle 100 is changed to the reversing position. Here, it is possible to configure such that the operational mode of the former (the foregoing embodiment) and the operational mode of the latter (modified embodiment) may be switched over by an operation of a switch by the driver.

In the foregoing embodiment, a captured image obtained by a camera (rearview camera 11) is used without changing its viewing point (change of the viewing position, viewing direction). The invention is not limited thereto. It is also possible to use a captured image which has undergone a viewing point change. For instance, it is possible to use a viewing point changed image after a processing of increasing/decreasing the depression angle of the captured image within a range of viewing direction in which an acute angle is formed relative to the horizontal (an image displaying vehicle surrounding with a depression angle being an acute angle) or a viewing point changed image with change of the viewing position, or a viewing point changed image after combination of such processings.

### Industrial Applicability

The present invention is applicable to a vehicle surrounding monitor apparatus configured to effect a predetermined processing on a captured image of the surrounding of a vehicle captured by a camera and to display the resultant image on a display device provided in the vehicle interior.

### Reference Signs List

- 11:: rearview camera (capturing means)
- 20:: electronic control unit it
- 21:: screen generation unit (screen generating means)
- 50:: vehicle surrounding monitor apparatus
- 100:: vehicle
- 200:: monitor (displaying means)
- 210:: display screen
- 220:: display screen
- 211:: center image (first image)
- 212:: right-side image (second image)
- 213:: left-side image (third image)
- 250:: dividing line
- 260:: icon
- 300:: indicator line

## Claims

1. A vehicle surrounding monitor apparatus (50) comprising:
at least one capturing means (11) for capturing an image of the surrounding of a vehicle (100);
a screen generating means (21) for generating, based on the captured image captured by said capturing means (11), a display screen (210) including a stopped state display image to be displayed when the vehicle is in a stopped state and a display screen (220) including a non-stopped state display image to be displayed when the vehicle is in a non-stopped state, wherein an area of the vehicle surrounding displayed by the non-stopped state display image is narrower than an area of the vehicle surrounding displayed by the stopped state display image; and
a displaying means (200) for displaying the display screens (210,220) generated by said screen generating means (21), wherein the displaying means (200) is configured to display the display screen (210) including said stopped state display image in the stopped state and the display screen (220) including said non-stopped state display image in the non-stopped state.

2. The vehicle surrounding monitor apparatus according to claim 1, wherein said capturing means (11) is a single capturing means and said non-stopped state display image is a partial image of said stopped state display image.

3. The vehicle surrounding monitor apparatus according to claim 1 or 2, wherein
said stopped state comprises a state from occurrence of a change of a shift position of the vehicle to a reversing position to determination of start of the vehicle; and
said non-stopped state comprises a state of occurrence of determination of start of the vehicle from the stopped state.

4. The vehicle surrounding monitor apparatus according to claim 3, wherein after the display screen (220) including said non-stopped state display image is once displayed, the display screen (210) including said stopped state display image is not displayed unless the shift position of the vehicle is changed to the reversing position.

5. The vehicle surrounding monitor apparatus according to claim 3 or 4, wherein said determination of start of the vehicle comprises determination of the vehicle having traveled by a predetermined distance after the shift position of the vehicle is changed to the reversing position.

6. The vehicle surrounding monitor apparatus according to claim 3 or 4, wherein said determination of start of the vehicle comprises determination of speed of the vehicle being over a predetermined value.

## Patentansprüche

1. Fahrzeugumgebungsüberwachungsvorrichtung (50) mit:
zumindest einer Aufnahmeeinrichtung (11) zum Aufnehmen eines Bilds der Umgebung eines Fahrzeugs (100);
einer Bildschirmerzeugungseinrichtung (21) zum Erzeugen eines Anzeigebildschirms (210) mit einem Anzeigebild eines angehaltenen Zustands, das anzuzeigen ist, wenn sich das Fahrzeug in einem angehaltenen Zustand befindet, und eines Anzeigebildschirms (220) mit einem Anzeigebild eines nicht angehaltenen Zustands, das anzuzeigen ist, wenn sich das Fahrzeug in einem nicht angehaltenen Zustand befindet, basierend auf dem aufgenommen Bild, das durch die Aufnahmeeinrichtung (11) aufgenommen wird, wobei ein Bereich der Fahrzeugumgebung, der durch das Anzeigebild eines nicht angehaltenen Zustands angezeigt wird, schmaler ist als ein Bereich der Fahrzeugumgebung, der durch das Anzeigebild eines angehaltenen Zustands angezeigt wird; und
einer Anzeigeeinrichtung (200) zum Anzeigen der durch die Bildschirmerzeugungseinrichtung (21) erzeugten Anzeigebildschirme (210, 220), wobei die Anzeigeeinrichtung (200) konfiguriert ist zum Anzeigen des Anzeigebildschirms (210) mit dem Anzeigebild eines angehaltenen Zustands in dem angehaltenen Zustand und des Anzeigebildschirms (220) mit dem Anzeigebild eines nicht angehaltenen Zustands in dem nicht angehaltenen Zustand.

2. Fahrzeugumgebungsüberwachungsvorrichtung gemäß Anspruch 1, wobei die Aufnahmeeinrichtung (11) eine einzelne Aufnahmeeinrichtung ist und das Anzeigebild eines nicht angehaltenen Zustands ein Teilbild des Anzeigebilds eines angehaltenen Zustands ist.

3. Fahrzeugumgebungsüberwachungsvorrichtung gemäß Anspruch 1 oder 2, wobei
der angehaltene Zustand einen Zustand von einem Auftreten eines Wechsels einer Schaltposition des Fahrzeugs in eine Rückwärtsfahrposition bis zu einer Bestimmung des Starts des Fahrzeugs umfasst; und
der nicht angehaltene Zustand einen Zustand eines Auftretens einer Bestimmung eines Starts des Fahrzeugs aus dem angehaltenen Zustand umfasst.

4. Fahrzeugumgebungsüberwachungsvorrichtung gemäß Anspruch 3, wobei, nachdem der Anzeigebildschirm (220) mit dem Anzeigebild eines nicht angehaltenen Zustands einmal angezeigt ist, der Anzeigebildschirm (210) mit dem Anzeigebild eines angehaltenen Zustands nicht angezeigt wird, sofern nicht die Schaltposition des Fahrzeugs sich in die Rückwärtsfahrposition gewechselt wird.

5. Fahrzeugumgebungsüberwachungsvorrichtung gemäß Anspruch 3 oder 4, wobei die Bestimmung eines Starts des Fahrzeugs eine Bestimmung umfasst, dass sich das Fahrzeug um eine vorbestimmte Wegstrecke bewegt hat, nachdem die Schaltposition des Fahrzeugs in die Rückwärtsfahrposition gewechselt ist.

6. Fahrzeugumgebungsüberwachungsvorrichtung gemäß Anspruch 3 oder 4, wobei die Bestimmung eines Starts des Fahrzeugs eine Bestimmung umfasst, dass die Geschwindigkeit des Fahrzeugs über einem vorbestimmten Wert liegt.

## Revendications

1. Appareil de surveillance des alentours d'un véhicule (50) comportant :
au moins des moyens de capture (11) destinés à capturer une image des alentours d'un véhicule (100) ;
des moyens de génération d'écran (21) destinés à générer, sur la base de l'image capturée par lesdits moyens de capture (11), un écran d'affichage (210) comprenant une image d'affichage à l'état arrêté devant être affichée quand le véhicule est dans un état arrêté et un écran d'affichage (220) comprenant une image d'affichage à l'état non-arrêté devant être affichée quand le véhicule est dans un état non-arrêté, dans lequel une zone des alentours du véhicule affichée par l'image d'affichage à l'état non-arrêté est plus étroite qu'une zone des alentours du véhicule affichée par l'image d'affichage à l'état arrêté ; et
des moyens d'affichage (200) destinés à afficher les écrans d'affichage (210, 220) générés par les moyens de génération d'écran (21), les moyens d'affichage (200) étant configurés pour afficher l'écran d'affichage (210) comprenant ladite image d'affichage à l'état arrêté dans l'état arrêté et l'écran d'affichage (220) comprenant ladite image d'affichage à l'état non-arrêté dans l'état non-arrêté.

2. Appareil de surveillance des alentours d'un véhicule selon la revendication 1, dans lequel lesdits moyens de capture (11) sont constitués par des moyens de capture uniques et ladite image d'affichage à l'état non-arrêté est une image partielle de ladite image d'affichage à l'état arrêté.

3. Appareil de surveillance des alentours d'un véhicule selon la revendication 1 ou 2, dans lequel ledit état arrêté comporte un état depuis l'apparition d'un changement de position de changement de vitesse jusqu'à une position de marche arrière pour une détermination de démarrage du véhicule ; et
ledit état non-arrêté comporte un état d'apparition d'une détermination du démarrage du véhicule à partir de l'état arrêté.

4. Appareil de surveillance des alentours d'un véhicule selon la revendication 3, dans lequel, après que l'écran d'affichage (220) comprenant ladite image d'affichage à l'état non-arrêté est affiché une première fois, l'écran d'affichage (210) comprenant ladite image d'affichage à l'état arrêté n'est pas affiché à moins que la position de changement de vitesse du véhicule soit changée pour la position de marche arrière.

5. Appareil de surveillance des alentours d'un véhicule selon la revendication 3 ou 4, dans lequel ladite détermination du démarrage du véhicule comporte la détermination du fait que le véhicule s'est déplacé sur une distance prédéterminée après que la position de changement de vitesse du véhicule est changée pour la position de marche arrière.

6. Appareil de surveillance des alentours d'un véhicule selon la revendication 3 ou 4, dans lequel ladite détermination du démarrage du véhicule comporte la détermination de la vitesse du véhicule qui est au-dessus d'une valeur prédéterminée.
